# EUROPÄISCHE PATENTSCHRIFT

(11) **EP 0 701 971 B1**
(45) Veröffentlichungstag und Bekanntmachung des Hinweises auf die Patenterteilung: **29.09.1999**
(21) Anmeldenummer: 95111371.1
(22) Anmeldetag: 20.07.1995
(51) Int. Cl.: C02F 1/28

(54) **Verfahren zur Reinigung von Grundwasser**
Method for purification of groundwater
Procédé pour l'épuration de l'eau souterraine

(30) Priorität: 17.09.1994 DE 4433225
(43) Veröffentlichungstag der Anmeldung: 20.03.1996
(73) Patentinhaber: HÜLS AKTIENGESELLSCHAFT, 45764 Marl (DE)
(72) Erfinder: Grund, Gerda Dr., D-49249 Dülmen (DE); Kahsnitz, John, Dr., D-45721 Haltern (DE)
(74) Vertreter: Olbricht, Gerhard, Dr.

(56) Entgegenhaltungen:
- AT-B- 392 632
- DD-A- 249 190
- DE-A- 4 204 573

## Beschreibung

Die Erfindung betrifft ein neues Verfahren zur Reinigung von Grundwasser, bei dem vor allem organische Verbindungen abgetrennt werden.

Über die Aufarbeitung von Grundwasser ist wenig bekannt. Dabei erscheinen zunehmend alarmierende Nachrichten über die Verseuchung von Grund- und Trinkwasservorkommen mit organischen Bestandteilen und insbesondere mit chlorierten Lösemitteln.

Für die Reinigung von Abwässern oder von industriellen Prozeßwässern werden dagegen mehrere Methoden angeboten. Dabei geht es allerdings um die Reduzierung von um Größenordnungen höheren Schadstoffkonzentrationen. Das Ziel ist hier, Wasser umweltverträglich abzugeben oder Wasser oder eine wäßrige Lösung wiederzuverwenden. Man hat dabei nicht die Absicht, Trinkwasser aufzubereiten.

In "Neuere Verfahrenstechnologien in der Abwasserreinigung, Abwasser- und Gewässerhygiene", R. Oldenbourg Verlag München Wien 1984, werden auf den Seiten 235 bis 251 mehrere Methoden zur Behandlung von Chlorkohlenwasserstoffe enthaltendem Abwasser aus Chlorierungsanlagen beschrieben. Nach einem Verfahren wird das Abwasser zunächst alkalisch gestellt (pH 11). Die anschließende Strippung, die durch Einblasen von Wasserdampf im Gegenstrom durchgeführt wird, ergibt ein Destillat, das nach Kondensation in eine Chlorkohlenwasserstoff-Phase und eine wäßrige Phase zerfällt. Am Sumpf des Strippers (Oxistripper) fällt ein Abwasser an, das anschließend biologisch gereinigt wird.

In speziellen Fällen kann auch ein Abwasser mit einem pH-Wert von 1 bis 2 einer Strippung mit Wasserdampf im Gegenstrom unterworfen werden. Am Sumpf dieses Strippers fällt ein Wasser mit einem hohen Eisen- und Salzsäuregehalt an, das zur weiteren Aufarbeitung einer chemisch-mechanischen Kläranlage zugeführt wird.

Die Reinigung von Chlorkohlenwasserstoffe enthaltendem Grubenabwasser wird hier in einer Adsorberharzanlage durchgeführt. Dabei wird das Grubenabwasser, nachdem es peinlichst von Feststoffen befreit wurde, durch ein Adsorberharz auf der Basis eines Divinylbenzol/Styrol-Copolymers geleitet. Zur Reaktivierung erfolgt eine Dampfdesorption. Da nach diesem Verfahren nach einem Jahr eine erhebliche Aktivitätsabnahme wegen irreversibler Eisenablagerungen zu verzeichnen war, wurde eine Neuanlage bei pH 1,5 betrieben.

Nach Technische Mitteilungen 77 (1984), 525 - 526, sind Styrol-Copolymere oder Polyacrylsäureester dazu geeignet, aliphatische und aromatische Kohlenwasserstoffe, chlorierte Kohlenwasserstoffe, Phenole, Pestizide und Tenside aus Abwässern zu entfernen. Die Regenerierung der Harze erfolgt danach mit Dampf. Bei Pestiziden wird jedoch mit Hilfe von Lösemitteln, wie Aceton oder Methanol, oder mit anorganischen Chemikalien regeneriert.

In DD 249 190 wird mit organischen Substanzen verunreinigte Salzsäure, die aus Chlorierungsprozessen stammt, mit Hilfe von hydrophilen, nachvernetzten Divinylbenzol/Styrol-Copolymeren, die vorzugsweise eine innere Oberfläche von 1 000 bis 1 600 m²/g aufweisen, gereinigt. Die Regenerierung des Harzes erfolgt hier mit 130 °C heißem Wasserdampf, wobei die Desorption der gebundenen organischen Stoffe auch mit Lösemitteln, wie Alkoholen und Ketonen, vorgenommen werden kann.

Nach DE-A-42 04 573 können u.a. auch kontaminierte Grundwässer dadurch gereinigt werden, daß man zunächst ungelöste Feststoffe filtriert und dann organische Bestandteile an ein nachvernetztes Divinylbenzol/Styrol-Copolymer adsorbiert, worauf mit Wasserdampf desorbiert wird. Der Wasserdampfdesorption kann eine Verdrängungsdesorption mit einem organischen Losungsmittel, das auch eine Carbonsäure sein kann, vorgeschaltet werden, wenn hochsiedende und in Wasser schwer lösliche Verunreinigungen entfernt werden sollen.

Durch die angegebenen Reinigungsverfahren werden hinsichtlich einzelner Schadstoffkomponenten Konzentrationen von < 0,1 mg/l erreicht. Die Gesamtmenge an organischen Bestandteilen oder an Chlorkohlenwasserstoffen liegt aber nach der Reinigung bestenfalls im Bereich von einigen mg/l bzw. von einigen ppm.

Aufgabe der vorliegenden Erfindung war es, die Reinigung von Grundwasser, bei der feste Bestandteile abgetrennt und organische Verbindungen an ein Adsorberharz aus einem Divinylbenzol/Styrol-Copolymer adsorbiert und mit Wasserdampf desorbiert werden, weiter zu entwickeln.

Aufgabe war es außerdem, Schadstoffe aus Grundwasser zu entfernen, die von besonderer Relevanz sind wie zum Beispiel Gemische organischer Halogenverbindungen zusammen mit Benzol, Toluol oder Xylol in Anwesenheit von Mangan- und Eisenverbindungen.

Darüber hinaus galt es, belastetes oder stark belastetes Grundwasser so zu reinigen, daß es ohne Bedenken fließenden Oberflächengewässern zugegeben werden kann. Das gereinigte Wasser könnte dabei als Kühlwasser oder für die Dampferzeugung und gegebenenfalls nach einer biologischen Reinigung auch zur Trinkwassergewinnung eignet sein. Im besonderen sollte der Anteil der aromatischen Kohlenwasserstoffe auf unter 50 µg/l und der der halogenierten Kohlenwasserstoffe auf unter 100 µg/l gesenkt werden.

Die Aufgabe wird erfindungsgemäß dadurch gelöst, daß das Adsorberharz nach der Wasserdampfdesorption mit einer Mineralsäure regeneriert wird.

Während die gestellt Aufgabe durch Strippen oder durch Oxidation mit H₂O₂ bei UV-Bestrahlung nicht gelöst wird, gelingt die Senkung der organischen Bestandteile im Grundwasser überraschend nach dem erfindungsgemäßen Verfahren. Angesichts der bekannten Ergebnisse bei der Reinigung von Industrieabwässern und von Salzsäure überrascht es, daß die Gehalte an organischen Substanzen im Grundwasser nach dem neuen Verfahren auf um 2 bis 3 Zehnerpotenzen niedrigere Werte gesenkt werden können.

Die Abtrennung der festen Bestandteile, vor allem von Schwebstoffen, erfolgt im allgemeinen durch Filtration. Dabei sind vor allem Sand- aber auch Stoff- und Papierfilter geeignet. Das zu reinigende Grundwasser kann bei der adsorptiven Reinigung bei seinem ursprünglichen pH-Wert belassen werden. Vorzugsweise liegt der pH-Wert bei 1 bis 8, wobei pH-Werte von 3 bis 7,5 ganz besonders bevorzugt werden.

Organische Verbindungen, die in belastetem Grundwasser enthalten sein können, sind beispielsweise aliphatische C₄- bis C₁₂-Kohlenwasserstoffe, wie Pentan, Hexan, Cyclohexan, Octan, Isooctan oder Decan, aromatische Kohlenwasserstoffe, wie Benzol, Toluol oder Xylol, Phenole, organische Säuren sowie Halogenkohlenwasserstoffe. Dazu gehören Chlorkohlenwasserstoffe, wie Chloroform, Tetrachlorkohlenstoff, 1,2-Dichlorethan oder 1,2-Dichlorpropan, bromierte Kohlenwasserstoffe, wie Bromchlormethan, Bromoform oder Brombenzol, und Fluorchlorkohlenwasserstoffe, wie z. B. Trifluorchlormethan.

Geeignete Adsorberharze sind vor allem Divinylbenzol/Styrol-Copolymere, wobei Produkte mit einer spezifischen Oberfläche von 600 bis 1 200 m²/g und im besonderen von 700 bis 900 m²/g bevorzugt werden. Verwendbar sind jedoch auch andere Polymere, die neutrale organische Verbindungen adsorbieren können.

Die Adsorption erfolgt im allgemeinen bei 15 bis 35 °C. Die Desorption mit Wasserdampf wird meist bei 100 bis 150 °C durchgeführt. Um das Harz zu schonen, werden dabei vorzugsweise Temperaturen von 110 bis 140 °C eingestellt.

Da es bei der adsorptiven Reinigung des Grundwassers mit nicht eingestelltem pH-Wert zu Ablagerungen auf dem Harz kommt, muß in regelmäßigen Abständen eine Entfernung von anorganischen Ablagerungen vorgenommen werden. Mineralsäuren, die zur Regenerierung des Adsorberharzes eingesetzt werden können, sind vor allem Salz-, Schwefel- und Phosphorsäure. Vorzugsweise setzt man eine 10- bis 20%ige Salzsäure ein und regeneriert bei 20 bis 80 °C. Hierbei wird ein sauerstoffhaltiges Gas, bevorzugt Luft, im Gegenstrom eingeleitet.

Die Regenerierung ist nicht nach jedem Adsorptions-Desorptions-Zyklus erforderlich, sondern erst dann, wenn die Adsorptionskapazität des Harzes nachläßt. Eine Regenerierung wird meist nach 30 bis 80 Zyklen vorgenommen, wobei bei einem sauren seltener als bei einem neutralen Grundwasser regeneriert werden muß.

Wenn das Grundwasser das Adsorberharz in einer Säule beispielsweise von unten nach oben durchströmt, so wird der Wasserdampf während der Desorptionsphase vorzugsweise in Gegenrichtung. also von oben nach unten, geführt. Bei der Regenerierung wird das sauerstoffhaltige Gas unterhalb der Harzschicht eingeleitet.

Nach dem vorliegenden Verfahren können Gehalte an organischen Bestandteilen von beispielsweise 200 mg/l auf unter 100 µg/l reduziert werden. Das gereinigte Grundwasser kann ohne Bedenken fließenden Oberflächengewässern zugegeben werden. Es kann bei niedrigem Salzgehalt als Kühlwasser eingesetzt und nach biologischer Reinigung als Trinkwasser verwendet werden.

Hohe Standzeiten des Harzes werden erreicht, da unvermeidliche Ausfällungen von anorganischen Ablagerungen am Adsorberharz durch regelmäßiges Spülen mit wäßriger Säure wieder entfernt werden.

Die folgenden Beispiele sollen die Erfindung verdeutlichen.

### Beispiel 1

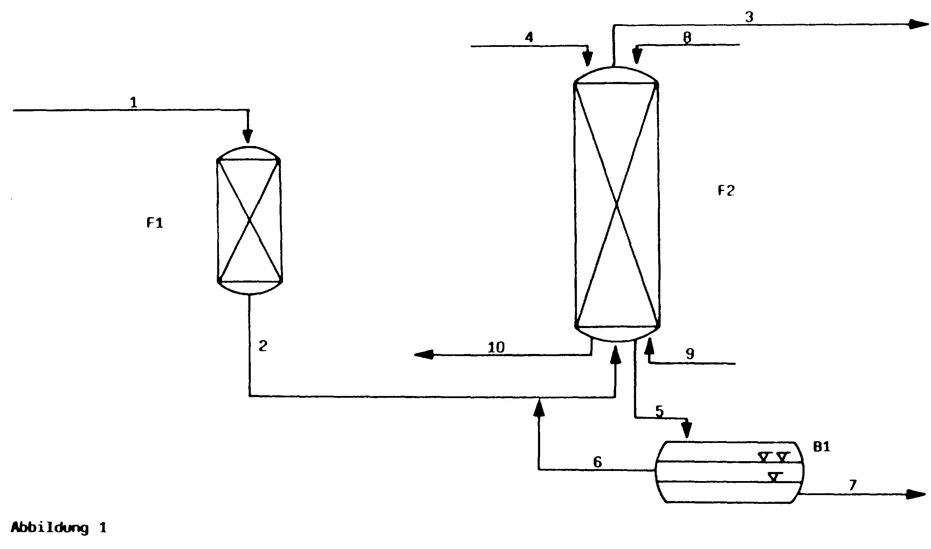

Gemäß Abbildung 1 wird Rohgrundwasser mit einem pH-Wert von 7,1 über Leitung 1 auf das Feststoff-Filter F1 gegeben. Das aus dem Filter über Leitung 2 heraustretende, von Schwebstoffen befreite Grundwasser, das 150 mg/l Chlorkohlenwasserstoffe (CKW) und 15 mg/l aromatische Kohlenwasserstoffe (AKW) aufweist, wird bei 20 °C und einem Volumenstrom von 30 l/h in den Adsorber F2 geleitet. Der Adsorber hat einen Innendurchmesser von 4 cm und eine Höhe von 150 cm und ist mit 1 kg Divinylbenzol/Styrol-Copolymer mit einer spezifischen Oberfläche von 800 m²/g (PURASORB® AP 250 der Fa. Purolite, D-40882 Ratingen) gefüllt. Über Leitung 3 erhält man ein gereinigtes Grundwasser mit 80 µg/l CKW und 10 µg/l AKW.

Nach einer Laufzeit von 50 Stunden wird die Grundwasserzufuhr zu F2 unterbrochen und Wasserdampf von 130 °C über Leitung 4 in einer Menge, die 0,5 % des gereinigten Wassers entspricht, auf den Adsorber gegeben. Das über Leitung 5 auslaufende Eluat wird im Phasentrennbehälter B1 getrennt, wobei die obere wäßrige Phase über Leitung 6 zurückgeführt und die untere organische Phase über Leitung 7 ausgetragen wird.

Nach 35 Adsorptions-Desorptions-Zyklen wird das Adsorptionsbett dadurch regeneriert, daß man 20%ige Salzsäure über Leitung 8 auf den 70 °C heißen Adsorber gibt und gleichzeitig Luft im Gegenstrom über Leitung 9 einleitet. Die beladene Säurelösung wird über Leitung 10 abgeführt.

### Beispiel 2

Es wird wie in Beispiel 1 verfahren mit dem Unterschied, daß das Rohgrundwasser vor dem Einleiten auf das Feststoff-Filter einen pH-Wert von 4 aufweist. Das gereinigte Grundwasser hat dabei die gleiche Qualität wie das von Beispiel 1. Eine Regenerierung mit Salzsäure wird jedoch erst nach 60 Zyklen erforderlich.

## Patentansprüche

1. Verfahren zur Reinigung von Grundwasser, wobei feste Bestandteile abgetrennt und organische Verbindungen an ein Adsorberharz aus einem Divinylbenzol/Styrol-Copolymer adsorbiert und dann mit Wasserdampf desorbiert werden,
dadurch gekennzeichnet,
daß das Adsorberharz nach der Desorption mit einer Mineralsäure regeneriert wird.

2. Verfahren nach Anspruch 1,
dadurch gekennzeichnet,
daß die festen Bestandteile bei einem pH-Wert von 1 bis 8, vorzugsweise von 3 bis 7,5, abgetrennt werden.

3. Verfahren nach Anspruch 1,
dadurch gekennzeichnet,
daß aromatische Kohlenwasserstoffe und Halogenkohlenwasserstoffe adsorbiert werden und das Adsorberharz ein Divinylbenzol/Styrol-Copolymer mit einer spezifischen Oberfläche von 600 bis 1 200 m²/g ist.

4. Verfahren nach Anspruch 1,
dadurch gekennzeichnet,
daß die Desorption bei 100 bis 150 °C, vorzugsweise bei 110 bis 140 °C, erfolgt.

5. Verfahren nach Anspruch 1,
dadurch gekennzeichnet,
daß mit einer 10- bis 20%igen wäßrigen Salzsäure bei 20 bis 80 °C regeneriert wird.

## Claims

1. A process for the purification of groundwater, solid constituents being separated off and organic compounds being adsorbed to an adsorber resin comprising a divinylbenzene/styrene copolymer and then being desorbed using steam, characterized in that the adsorber resin, after the desorption, is regenerated using a mineral acid.

2. A process according to claim 1, characterized in that the solid constituents are separated off at a pH of from 1 to 8, preferably from 3 to 7.5.

3. A process according to claim 1, characterized in that aromatic hydrocarbons and halogenated hydrocarbons are adsorbed and the adsorber resin is a divinylbenzene/styrene copolymer having a specific surface area of from 600 to 1200 m²/g.

4. A process according to claim 1, characterized in that the desorption is carried out at from 100 to 150°C, preferably at from 110 to 140°C.

5. A process according to claim 1, characterized in that regeneration is carried out using a from 10 to 20 % strength aqueous hydrochloric acid at from 20 to 80°C.

## Revendications

1. Procédé de purification de l'eau souterraine dans lequel on sépare les composants solides et on adsorbe les composés organiques sur une résine adsorbante constituée d'un copolymère divinylbenzène/styrène puis on désorbe avec de la vapeur d'eau,
caractérisé en ce qu'
on régénère la résine adsorbante avec un acide minéral après la désorption.

2. Procédé selon la revendication 1,
caractérisé en ce qu'
on sépare les composants solides à un pH de 1 à 8, de préférence de 3 à 7,5.

3. Procédé selon la revendication 1,
caractérisé en ce qu'
• on adsorbe les hydrocarbures aromatiques et les hydrocarbures halogénés, et
• la résine adsorbante est un copolymère divinylbenzène/styrène ayant une surface spécifique de 600 à 1200 m²/g.

4. Procédé selon la revendication 1,
caractérisé en ce que
la désorption s'effectue entre 100 et 150°C, de préférence entre 110 et 140°C.

5. Procédé selon la revendication 1,
caractérisé en ce qu'
on régénère avec une solution aqueuse à 10 à 20% d'acide chlorhydrique entre 20 et 80°C.
